(19) Europäisches Patentamt / European Patent Office / Office européen des brevets

(11) **EP 4 050 059 A1**

(12) **EUROPEAN PATENT APPLICATION**
published in accordance with Art. 153(4) EPC

(43) Date of publication:
31.08.2022  Bulletin 2022/35

(21) Application number: 20879640.9

(22) Date of filing: 23.10.2020

(51) International Patent Classification (IPC):
$C08J\ 3/075$ (2006.01)    $C08G\ 14/10$ (2006.01)
$C08G\ 14/12$ (2006.01)    $C08F\ 251/00$ (2006.01)
$C08F\ 16/02$ (2006.01)    $H01M\ 10/0561$ (2010.01)

(52) Cooperative Patent Classification (CPC):
C08F 16/02; C08F 251/00; C08F 259/00;
C08G 14/10; C08G 14/12; C08J 3/075;
H01M 10/0561; Y02E 60/10

(86) International application number:
PCT/RU2020/050293

(87) International publication number:
WO 2021/080472 (29.04.2021 Gazette 2021/17)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 25.10.2019  RU 2019134226

(71) Applicant: **Comberry, LLC**
**Ulyanovsk, Ulyanovskaya obl. 432072 (RU)**

(72) Inventor: **MESHCHERYAKOV, Vladimir Igorevich**
**Moskovskaya  obl., 140563 (RU)**

(74) Representative: **Sezgin, Hatice Özlem**
**Demiron Intellectual Property Inc.**
**23 Nisan Mah. Atabulvari Gizemler**
**Plaza 3 No:5 K:3 D:17 Nilüfer**
**16140 Bursa (TR)**

(54) **TRIAZINE COPOLYMER-BASED TRANSPARENT GEL-POLYMER ELECTROLYTES**

(57)    Method for manufacturing optically transparent gel-polymer electrolytes involves reaction of copolymerization of melamine and formaldehyde or melamine and glyoxal with one or several polyols and/or with one or several monosaccharides, oligosaccharides or polysaccharides and adding of a concentrated acid to form an optically transparent gel-polymer. The electrolyte according to the invention can be used in electrochromic devices and other optical-electrochemical devices as well as in devices for storing electrical energy (like batteries, supercapacitors and hybrid power storage devices), thus replacing conventional water-based electrolytes.

Stage 2. Melamine-formaldehyde gel-polymer electrolyte synthesis

= polyols, monosaccharides, disaccharides or any polysaccharides or their product with free -OH groups where x = 0, 1, 2, ...

$H_nX^{n-}$ = acids: HCl, HBr, $H_2SO_4$, $H_3PO_4$, etc.

$H_3O^+$ = aqueous cation

$X^{n-}$ = acid anion

Fig. 2

## Description

## Field of the Invention

The invention pertains to gel-polymer electrolytes. These electrolytes are optically transparent and suitable for use in electrochromic devices or other optical-electrochemical devices. Besides that, gel-polymers based on triazine (melamine) copolymer can be used in devices for storing electrical energy (batteries, supercapacitors, and hybrid storage devices) instead of traditional water-based electrolytes.

## Prior Art

There are a number of electrochemical devices requiring optically transparent electrolytes. Such devices primarily include electrochromic cells. In recent years, the number of companies producing smart glass for building facades and for automotive industry has been growing rapidly. The operation principle of such glass is based on electrochemical changes occurring in electrochromic materials [1], [2]. Conventional liquid electrolytes have very high ionic conductivity. However, their use in smart glass leads to unavoidable disadvantages for many reasons. First, their use requires a reliable sealing of devices having large weight and area, and second, liquid electrolytes are, as a rule, chemically aggressive and can be harmful not only for environment, but also for people operating or manufacturing smart glasses.

Therefore, in electrochromic glasses, it is preferred to use safe compositions of electrolytes that are not in a liquid state, but in form of thick gels or gel-polymers, or in form of entirely polymeric or special solid inorganic materials with ionic conductivity (so-called solid-state electrolytes) [3]-[6].

Optically transparent electrolytes are usually gel-electrolytes. In such an electrolyte, the polymer gel forms a kind of a "frame" for conventional liquid electrolytes based on acids, alkalis, inorganic salts or organic ionic liquids. There are known gels based on polystyrene, polyacrylates, polyvinyl chlorides, polyvinyl fluorides, polyvinyl acetates, polyvinyl alcohols, polyethylene oxide, polyvinylidene chloride, various derivatives containing epoxy group and siloxane polymers [7]-[9]. Besides that, inorganic or hybrid materials are used as a gelling additive [10]. For instance, liquid glass and various copolymers of orthosilicates and polyol alcohols are used as a gel base [11]. In gel electrolytes, there is no chemical interaction between electrolyte and polymer composition. At the same time, there are polymer or gel-polymer electrolytes in which chemical interaction between electrolyte and polymer frame exists and the polymer frame itself is a part of electrolyte. Such interaction becomes possible due to organic functional groups contained in a polymer composition (for example, -COO⁻, -SO₃⁻, etc.). Accordingly, the polymer included in such compositions is a polyelectrolyte and itself has a certain amount of ionic conductivity. In the simplest case, polymer electrolytes have proton conductivity, since they form such groups with protons, for example, - COO⁻H⁺ and -SO₃⁻H⁺, and they can also have ionic conductivity due to formation of metal salts (usually monovalent), for example, -COO⁻M⁺, -SO₃⁻M⁺ (where M = Li, Na, K, etc.). At the same time, gel-polymer electrolytes also contain some portion of low molecular solvents (water or organic solvents), which mainly provide ion mobility, and consequently, ionic conductivity of gel-polymer electrolytes as a whole.

Besides that, there are true polymer (solid-state) electrolytes that can conduct protons or monovalent metal ions [12]. They usually contain the same functional groups as those in gel-polymer electrolytes, or they represent polymeric quaternary ammonium salts or nitrogen-containing heterocyclic salts [13], [14].

These three groups of electrolytes have both pros and cons. In particular, gel-electrolytes usually have high electrical conductivity (about $10^{-2}$ to $10^{-3}$ S·cm⁻¹), but they shall be used with special care, since when the solvent leaks or partially evaporates, they have a strong shrinkage, which causes visible defects in form of bubbles, cavities, cracks, etc. and, ultimately, impairs or disrupts operation of an electrochemical cell. It is quite evident that such defects are unacceptable when electrolyte is used in optical systems.

All-polymer electrolytes practically do not shrink, but their electrical conductivity is low ($10^{-4}$ - $10^{-6}$ S·cm⁻¹) and usually strongly depends on ambient temperature. Conductivity of polymer electrolytes may decrease by several orders when the temperature drops below 0 °C.

The technology for producing transparent gel-polymer electrolytes based on melamine, formaldehyde, polyols or saccharides is described to various extents in a number of patent documents.

Patent document US7931964B2 ( Microporous layers, an article comprising a microporous layer, and a method of manufacture thereof)) discloses a gel-polymer electrolyte obtained by copolymerization of (a) melamine, (b) formaldehyde or glyoxal and (c) one or more polyols and/or one or more monosaccharides, oligosaccharides or polysaccharides. However, this document does not disclose addition of a concentrated acid to copolymerization product to form an optically transparent gel-polymer with proton conductivity.

Patent document EP2983186A1 (Electrode composition for supercapacitor, cured product of said composition, electrode comprising said cured product, capacitor comprising said electrode, and manufacturing method for said supercapacitor) discloses a transparent electrode obtained by copolymerization of (a) melamine, (b) formaldehyde or glyoxal and (c) one or more polyols and/or one or more monosaccharides, oligosaccharides or polysaccharides. However, this document is silent on obtaining an optical transparent proton-conducting gel-polymer.

Patent document US7842637B2 (Electroactivated film with polymer gel electrolyte) discloses a gel-polymer electrolyte obtained by copolymerization of (a) melamine, (b) formaldehyde or glyoxal and (c) one or more polyols and/or one or more monosaccharides, oligosaccharides or polysaccharides. However, this document does not disclose addition of a concentrated acid to copolymerization product to form an optically transparent gel-polymer with proton conductivity.

Patent document US6280881B1 (Lithium secondary battery) discloses a gel-polymer electrolyte obtained by copolymerization of (a) melamine, (b) formaldehyde or glyoxal and (c) one or more polyols and/or one or more monosaccharides, oligosaccharides or polysaccharides. However, this document does not disclose that a concentrated acid is added to copolymerization product to form an optically transparent gel-polymer with proton conductivity.

Patent document US8642895B2 (Substrate with transparent conductive layer and method for producing the same, and touch panel using the same) discloses a transparent carrying substrate for electrode obtained by copolymerization of (a) melamine, (b) formaldehyde or glyoxal and (c) one or more polyols and/or one or more monosaccharides, oligosaccharides or polysaccharides. It is mentioned that the substrate can contain acids. However, the document is silent about addition of a concentrated acid i to copolymerization product to form an optically transparent gel-polymer with proton conductivity.

Patent document US8968928B2 (Primer for battery electrode) discloses a sublayer material for a current collector layer obtained by copolymerization of (a) melamine, (b) formaldehyde or glyoxal and (c) one or more polyols and/or one or more monosaccharides, oligosaccharides or polysaccharides. However, the document is silent about addition of a concentrated acid to copolymerization product to form an optically transparent gel-polymer with proton conductivity.

Patent document US7238451B2 (Conductive polyamine-based electrolyte) discloses a gel-polymer electrolyte obtained by copolymerization of (a) melamine, (b) formaldehyde or glyoxal and (c) one or more polyols and/or one or more monosaccharides, oligosaccharides or polysaccharides. Influence of strong acids on polymerization reaction and electrolyte conductivity is discussed. However, the document is silent about addition of a concentrated acid to the copolymerization product to form an optically transparent gel-polymer with proton conductivity.

Analysis of the prior art documents reveals that the field to which the invention pertains does not include obtaining melamine-based optical transparent gel-polymer electrolytes with a proton conductivity derived by copolymerization of melamine and formaldehyde or melamine and glyoxal with one or several polyols and/or one or several monosaccharides, oligosaccharides or polysaccharides and their derivatives with subsequent addition of concentrated acid to form an optically transparent gel-polymer, which are suitable for use in electrochromic and other optical-electrochemical devices or in devices for storing electrical energy (like batteries, supercapacitors and hybrid storage devices) and which are able to replace conventional water-based electrolytes.

Gel-polymer electrolytes based on melamine copolymers have outstanding optical transparency, high ionic conductivity, resistance to mechanical stress, good adhesion to materials of different nature and plasticity, and also have very little shrinkage. Their use in electrochemical devices instead of conventional water-based electrolytes makes it possible to expand operating temperature range of devices, increase their service life, reduce fire hazard and provide significant mechanical strength of final products.

## Summary of the Invention

Gel-polymer electrolytes provide a compromise solution for most electrochemical devices. They have acceptable conductivity and are not exposed to substantial physical and chemical changes during operation.

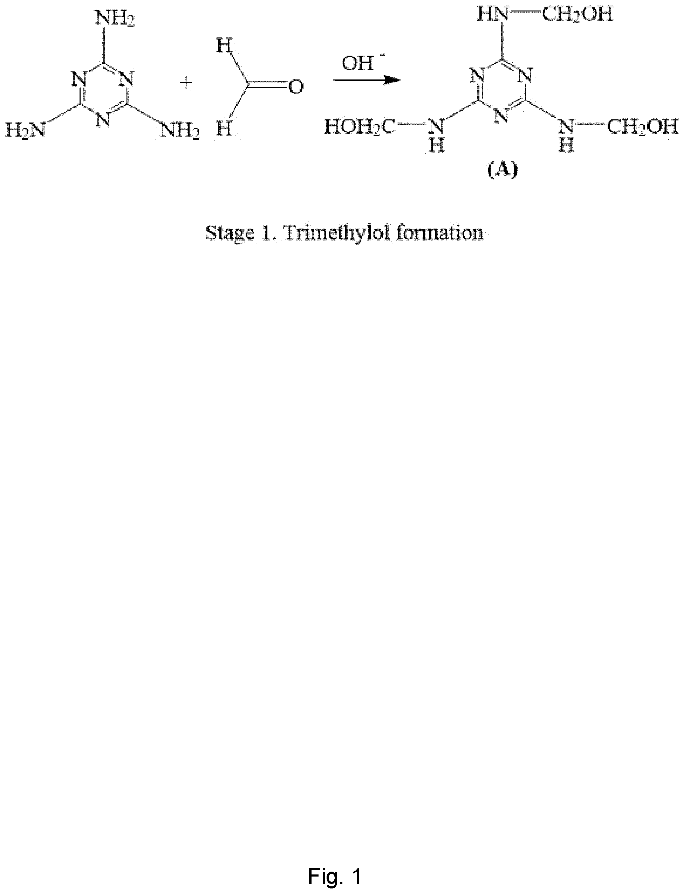

The inventor developed gel-polymer proton electrolytes based on triazine compounds (melamine copolymers) with various polyatomic alcohols, monosaccharides, oligosaccharides, polysaccharides and their derivatives containing more than one hydroxyl group (Figs. 1-2). It was found during experiments that such copolymers have sufficiently high electrical conductivity (approximately $1.2\cdot10^{-1}...2.5\cdot10^{-1}$ S·cm$^{-1}$), optical transparency, mechanical strength and little shrinkage, provided that the electrochemical cell is properly sealed.

According to the invention, the electrolytes were developed primarily for use in electrochromic devices. However, owing to their high ionic conductivity, chemical stability, ease of use and low cost, they can certainly be used as electrolytes in other types of electrochemical devices, such as lead-acid batteries or supercapacitors.

Formation of transparent gel-polymers based on simple melamine-formaldehyde derivatives is described in reference materials [15]-[18]. Synthesis of modified melamine copolymers with polyols, organic dicarboxylic acids and aldehydes is also described in reference sources [19], [20]. However, according to data by the inventor, the gels obtained in this way were used for other purposes. In particular, they were used as adhesives for wood or paper, to improve the properties of concrete, or for manufacturing carbon aerogels doped with other elements (in particular, nitrogen) by pyrolysis in inert atmosphere [21]. According to data by the inventor, melamine copolymers with polyols, monosaccharides, oligosaccharides and polysaccharides, and their derivatives, were not previously used as a base for formation of transparent conducting gel-polymer electrolytes for electrochromic devices.

Perhaps, this is due to the fact that when adding acids to melamine formaldehyde polymers, they are usually polymerized with formation of opaque polymers of white color. And only use of a deliberately large amount of monoacids such as HF, HCl, HBr and CCl$_3$COOH enables formation of a transparent gel-polymer. When using two- and three-base acids (for example, H$_2$SO$_4$ and H$_3$PO$_4$), only opaque or semi-translucent gel-polymers with large optical scattering are obtained. In addition, these gel-polymers give noticeable shrinkage during hardening and drying. All these circumstances prevent use of these gel-polymers in electrochromic material-based photovoltaic devices.

As a result of research, the inventor developed copolymers based on a combination of melamine formaldehyde with polyatomic alcohols (polyols), sugars and polysaccharides. Contrary to conventional melamine copolymers, they form transparent gel-polymers when any acid (single-base and multi-base) is added in several ranges of concentrations. In addition, owing to sufficient plasticity of structure of such gel-polymers, they technically do not shrink when gelling. Besides of the above-said, they have high adhesive properties and high mechanical strength, which facilitates their use as a part of an electrochromic device or as a proton electrolyte in power sources. [22], [23].

**Brief Description of Drawings**

Fig. 1 shows a schematic diagram of first stage of gel-polymer electrolyte synthesis that is formation of trimethylol melamine.

Fig. 2 shows a schematic diagram of second stage of optically transparent melamine-formaldehyde gel-polymer electrolyte synthesis by reaction of trimethylol melamine with polyols, monosaccharides, oligosaccharides, polysaccharides and any of their derivatives containing more than one free OH$^-$ group.

Fig. 3 shows a schematic diagram for measuring ionic conductivity of a gel electrolyte by impedance spectroscopy between two platinum electrodes.

Fig. 4 shows a schematic diagram of an electrochromic device. The process of coloring (a) occurs when protons move towards the electrochromic electrode and process of bleaching (b) is achieved after polarity inversion.

Fig. 5 shows a schematic diagram of a secondary electrochromic cell. It illustrates motion of protons and anions during discharge (a) and charge (b), also it shows schematically faradic processes at the electrodes.

Fig. 6 shows a schematic diagram of a symmetrical supercapacitor with an electrical double layer and a gel-polymer electrolyte with proton conductivity.

**Detailed Description of Embodiments**

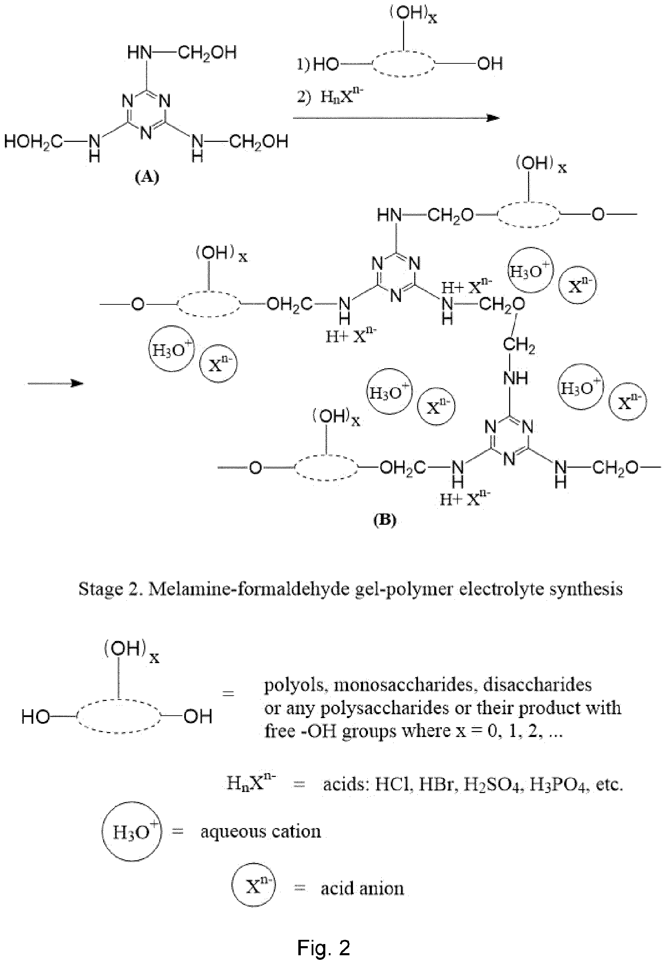

Main drawbacks of melamine-based polymers are their fragility and tendency to shrinkage. To overcome them, the inventor of the present invention developed a method of obtaining more elastic melamine derivatives by copolymerization of trimethylol melamine (Fig. 1) with polyols, sugars, starch and cellulose derivatives. Copolymerization occurs with relatively long polymer chains and hydroxyl-terminated groups (Fig. 2), which contributes to elasticity of the resulting polymer. In addition, hydroxyl-containing groups in the final melamine copolymers are quite voluminous and significantly reduce shrinkage of these copolymers.

It should be noted that the copolymers obtained in this way represent transparent or translucent liquids of various viscosities. Some of them can be stored for up to 12 months (usually from 30 days to 8 months) without significant change in their physical properties. Further, by adding strong mineral or organic acids to melamine copolymers, proton-conducting gels are obtained.

Immediately after adding a strong acid, the solution remains liquid and retains transparency, but in a while the process of deeper polymerization begins and the polymer solution turns into a ion-conducting gel-electrolyte. At the same time, the process of conversion of the solution into gel can take quite a long time and its duration depends both on concentration of the acid and on presence of hydrophobic groups in the polyol chain. The stronger the acid and the higher its concentration, the slower the gel formation process. Hydrophobic groups in polyols also significantly reduce rate of gel formation. For example, when using propylene glycol and its derivatives, in particular, poloxamers [24], the gel formation process may take up to 72 hours or more.

Unexpectedly, when very large amounts of strong concentrated acids (for example, concentrated sulfuric acid) were added to copolymer solutions in ratio of 1:1 or even 1.5:1 (in terms of polymer) there was no instant polymerization with formation of a solid phase (gel-polymer), but a slow (up to 10 hours) thickening of the initial copolymer occurred with formation of very elastic and completely transparent gel-polymers without separation of the liquid phase.

In addition, it should be noted that dependence of transparency of the proton-conducting gel on the concentration of an acid is not linear. With increase in the acid content, at least two values of content ratio between the acid and the melamine copolymer are observed, at which the gel electrolyte becomes transparent. Transparent gel-polymer electrolytes are developed at acid concentration from 3.0% to 7.5% and from 10.0% to 40.0% in a copolymer solution. Between these values, the gel can be in a very haze state, opalescent, or even completely white and opaque.

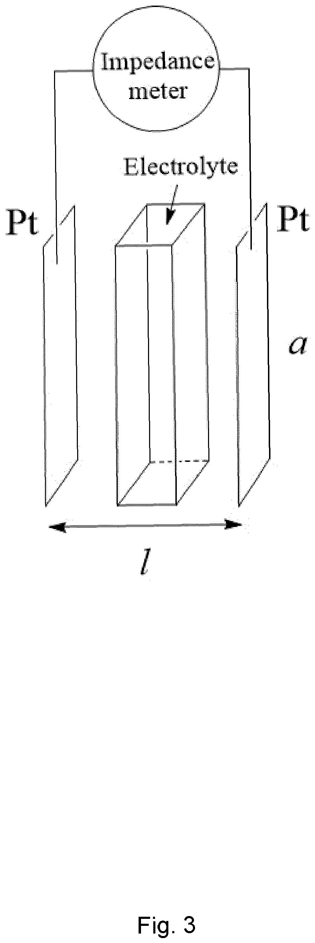

Ionic conductivity of melamine electrolytes was measured in a cell containing two platinum electrodes with a working surface area ($a$) of 17.2 cm$^2$. The distance ($l$) between the electrodes was 1 mm (see Fig. 3). The impedance of the cell was measured by Electrochemical Impedance Spectroscopy (EIS) in frequency range of 1 kHz to 0.5 MHz with a voltage amplitude between 50 mV and 150 mV. As a result, a frequency response was obtained for each gel-polymer electrolyte (Nyquist plot). To determine the impedance value (Z), the minimum value was selected along the ReZ (Ohm) axis and along the ImZ (Ohm) axis. The conductivity was determined by the formula (1) [25].

$$\sigma = \left(\frac{1}{Z}\right) \bullet \left(\frac{l}{a}\right) \quad (1)$$

Ionic conductivity of all gel-polymer electrolytes obtained by the method described herein was in range of $1.2 \cdot 10^{-1}$ to $2.5 \cdot 10^{-1}$ S·cm$^{-1}$. Such high conductivity makes it possible to achieve good characteristics of electrochromic and other galvanic devices.

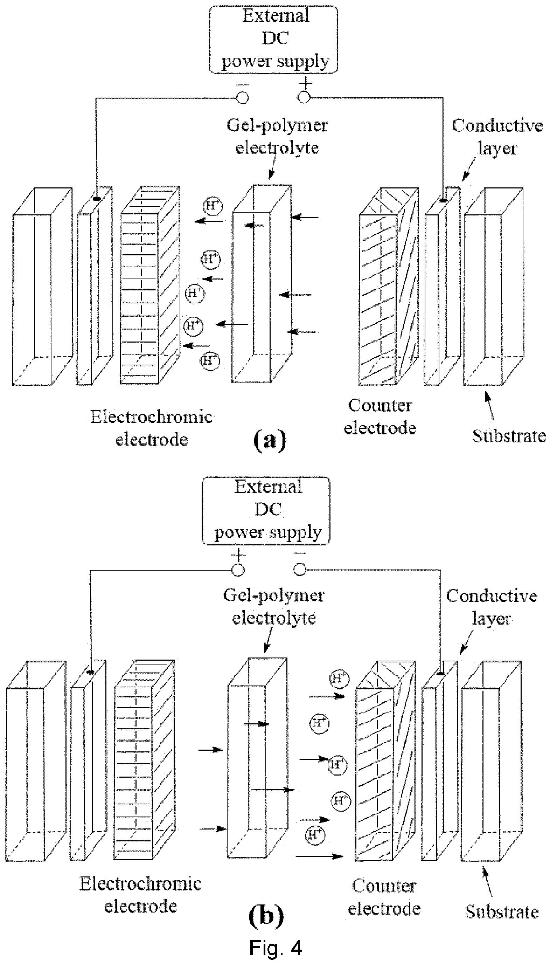

The electrochromic devices were manufactured by the inventor of the present invention with use of the proposed gel-polymer electrolytes to verify experimentally their operability. A generalized schematic diagram of these devices is shown in Fig. 4. Tungsten oxide-based material was used for the electrochromic electrode, and doped cerium oxide $CeO_2$:M (M is a transition metal) was used for the counter electrode. Both materials were magnetron sputtered to a glass substrate with applied layer of Fluorine doped Tin Oxide (FTO). Operation voltage in such an electrochemical cell, which provides change of coloring, did not exceed 1.0 V. This potential value should be considered acceptable due to limitation of voltammetric window of aqueous electrolytes, at which their premature degradation does not occur ($\leq 1.23$ V).

Owing to high conductivity of the electrolyte, speed of switching from bleached state to the colored state is very high in such a cell, usually 5 to 20 seconds with a distance between the electrodes of 1 mm. At the same time, with decrease in the distance between the electrodes, there is no significant increase in speed. Apparently, operation of the electrochemical cell in such conditions is limited by speed of electrochemical processes occurring directly on the electrodes, not conductivity of the gel-polymer electrolyte.

The schematic diagram of the electrochromic device in Fig. 4 proposes use of inorganic materials as an electrochromic electrode and a counter electrode. Nevertheless, it should be obvious that the gel-polymer electrolytes developed by the inventor can also be successfully used in devices based on suitable organic electrochromic materials.

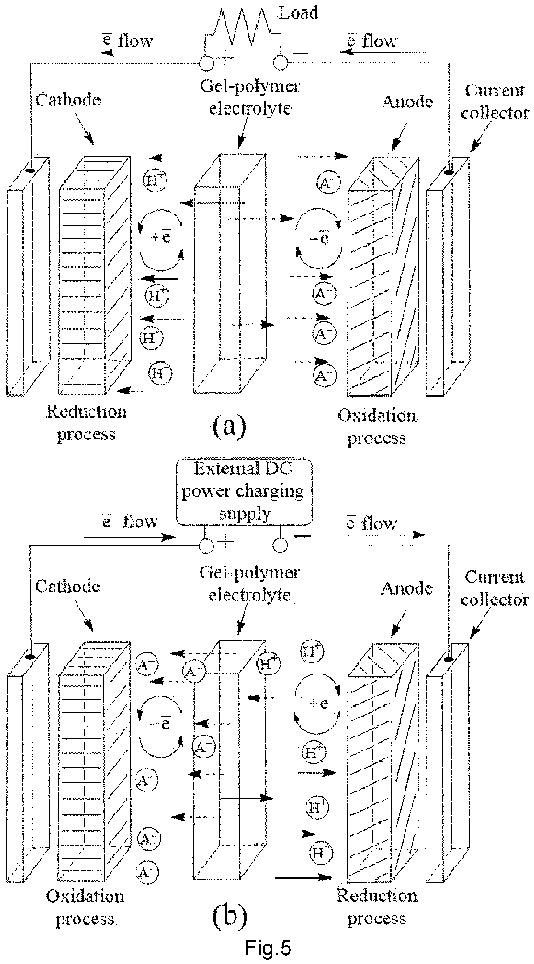

Also, the inventor has manufactured electrochemical current sources (batteries) using melamine copolymer-based gel-polymer electrolytes to check the present invention experimentally. A generalized schematic diagram of these devices is shown in Fig. 5. An electrochemical system of a lead-acid battery was used as an example. Sulfuric acid solution was replaced with a gel-polymer electrolyte that was obtained by adding $H_2SO_4$ of a similar concentration to the initial copolymer. Thus, all electrochemical processes in this device were similar to processes in the well-known lead-acid battery.

Due to the fact that ionic conductivity of gel-polymer melamine electrolytes used in the device is not as high as that of a conventional sulfuric acid solution, the power output of the battery was slightly lower than that of cells assembled according to the classical scheme. However, the battery capacity remained unchanged, and its service life increased significantly. Owing to absence of the liquid phase, operating safety of the battery and its resistance to mechanical stress increase. In addition, such a battery does not require a separator between the electrodes, since the elastic gel-polymer electrolyte ideally performs as a separator and a membrane, thus eliminating incorrect operation of the electric current source.

It should be obvious that a schematic diagram similar to the one shown in Fig. 5 can be used to manufacture any power sources (including primary ones) using proton-conducting electrolytes.

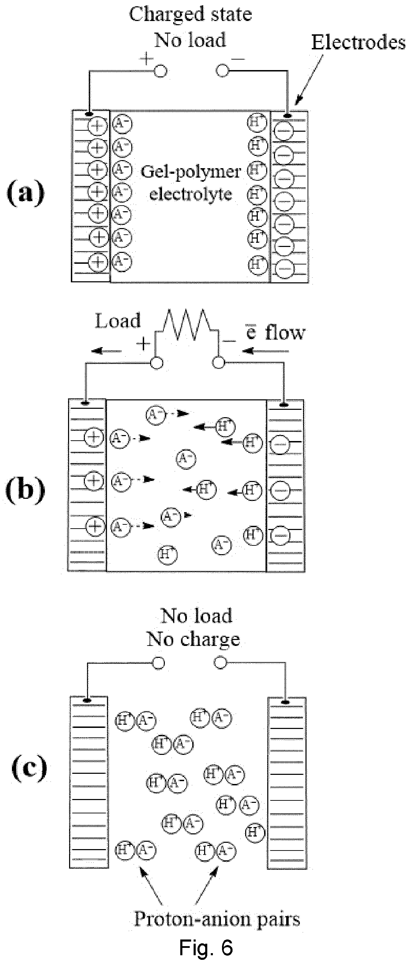

The inventor also manufactured supercapacitors comprising melamine copolymer-based gel-polymer electrolytes to test the invention experimentally. As an example, basic symmetrical supercapacitors with an electrical double layer were used [24], [26], [27]. A generalized schematic diagram of these devices is shown in Fig. 6. The electrodes were made of carbon paper and a gel-polymer with $H_2SO_4$ concentration of approximately 0.5-2.0 M was used as an electrolyte. Use of a separator in this case is not required. The device operated normally in the voltage range of 0-1.2 V, and its characteristics were very close to those of similar devices comprising acid electrolytes. Specific capacity of the supercapacitors strongly depended on porosity of carbon paper. There was no decrease in capacity during 10 000 charge-discharge cycles.

The following are examples of implementation of the invention.

*Example 1. Synthesis of ethylene glycol melamine formaldehyde concentrate EMFC-3-5 (50%)*

31.53 g (0.25 mol) of melamine, 15.52 g (0.25 mol) of ethylene glycol, 4.86 g of butanol-1, 22.43 g of water and 5.00 g of 2% NaOH solution were placed in a three-neck flask equipped with a stirrer, reflux condenser and thermometer. The contents were mixed and heated up to 85-90°C, after that 56.76 g (0.70 mol) of 37% formalin solution preheated to 50°C was added, while ensuring that temperature of the reaction mixture did not fall below 70°C. Melamine dissolved within 1-2 minutes and the reaction mixture became completely transparent. The reaction was conducted for 5 hours at a temperature of 80-85°C. Further, the reaction mixture was quickly cooled (in less than 10 minutes) to room temperature. The prepared 50% solution of melamine copolymer and ethylene glycol was mixed with concentrated hydrochloric acid at ratio of 5 ml of the solution to 0.8-1.1 ml of the acid while cooling with ice and vigorous stirring. The obtained transparent solution was placed in an electrochromic cell as electrolyte. It took 7 to 24 hours to form a proton-conducting transparent gel-polymer.

Conductivity of the obtained gel-polymer electrolyte was in range of $15.6 \cdot 10^{-1}$ to $1.5 \cdot 10^{-1}$ S·cm$^{-1}$, depending on amount of the added acid. Transparency in visible wavelength range was $T_{380-780} = 99.8\%$ for polymer layer thickness of 1 mm.

*Example 2. Synthesis of glycerol melamine formaldehyde concentrate GMFC-3-5 (50%)*

31.53 g (0.25 mol) of melamine, 23.02 g (0.25 mol) of glycerol, 4.86 g of butanol-1, 29.93 g of water and 5.00 g of 2% NaOH solution were placed in a three-neck flask equipped with a stirrer, reflux condenser and thermometer. The contents were heated while mixing to 85-90°C, after that 56.76 g (0.70 mol) of 37% formalin solution preheated to 50°C was added, while ensuring that temperature of the reaction mixture did not fall below 70°C. Melamine dissolved within 1-2 minutes and the reaction mixture became completely transparent. The reaction was conducted for 5 hours at a temperature of 80-85°C. Then the reaction mixture was quickly cooled (in less than 10 minutes) to room temperature. The obtained 50% solution of the melamine copolymer and glycerol was mixed with concentrated hydrochloric acid at ratio of 5.0 ml of the solution to 0.7-1.3 ml of the acid while cooling with ice and vigorous stirring. The obtained transparent solution was placed in an electrochromic cell as electrolyte. It took 7 to 48 hours to form a proton conducting transparent gel-polymer.

Conductivity of the obtained gel-polymer electrolyte was in range of $1.56 \cdot 10^{-1}$ to $1.48 \cdot 10^{-1}$ S·cm$^{-1}$, depending on amount of the added acid. Transparency in visible wavelength range was $T_{380-780} = 99.9\%$ for polymer layer thickness of 1 mm.

*Example 3. Synthesis of glycerol melamine formaldehyde concentrate GMFC-3-5 (60%)*

31.53 g (0.25 mol) of melamine, 23.02 g (0.25 mol) of glycerol, 4.86 g of butanol-1, 4.75 g of water and 5 g of 2% NaOH solution were placed in a three-neck flask equipped with a stirrer, reflux condenser and thermometer. The contents were heated while mixing to 85-90°C, after that 56.76 g (0.70 mol) of 37% formalin solution preheated to 50°C was added, while ensuring that temperature of the reaction mixture did not fall below 70°C. Melamine dissolved within 0.5-2 minutes and the reaction mixture became completely transparent. The reaction was conducted for 5 hours at a temperature of 80-85°C. Further, the reaction mixture was quickly cooled (in less than 10 minutes) to room temperature. The obtained 60% solution of the melamine copolymer with glycerol was mixed with concentrated hydrochloric acid at ratio of 5.0 ml of the solution to 0.7-1.3 ml of the acid. The obtained transparent solution was placed in an electrochromic cell as electrolyte. It took 5 to 48 hours to form a transparent and flexible gel-polymer with proton conductivity.

Conductivity of the obtained gel-polymer electrolyte was in range of $1.55 \cdot 10^{-1}$ to $1.59 \cdot 10^{-1}$ S·cm$^{-1}$, depending on amount of the added acid. Transparency in visible wavelength range was $T_{380-780} = 99.8\%$ for polymer layer thickness of 1 mm.

*Example 4. Synthesis of glycerol melamine formaldehyde concentrate GMFC-3-5 (65%)*

31.53 g (0.25 mol) of melamine, 23.02 g (0.25 mol) of glycerol, 4.86 g of butanol-1 and 0.20 g of NaOH were placed in a three-neck flask equipped with a stirrer, reflux condenser and thermometer. The contents were heated while mixing to 85-90°C, after that 56.76 g (0.70 mol) of 37% formalin solution preheated to 50°C was added, while ensuring that temperature of the reaction mixture did not fall below 70°C. Melamine was dissolved within 0.5-2 minutes and the reaction mixture became completely transparent. It took 5 hours to conduct the reaction at a temperature of 80-85°C. Further, the reaction mixture was quickly cooled (in less than 10 minutes) to room temperature. The obtained 65% melamine copolymer with glycerol was mixed under ice cooling and vigorous stirring with concentrated hydrochloric acid at ratio of 5.0 ml of solution to 0.7-1.3 ml of acid. The obtained transparent solution was placed in an electrochromic cell as electrolyte. It took 5 to 36 hours to form a transparent and flexible gel-polymer with proton conductivity.

Conductivity of the obtained gel-polymer electrolyte was in range of $1.35 \cdot 10^{-1}$ to $1.50 \cdot 10^{-1}$ S cm$^{-1}$, depending on amount of the added acid. Transparency in visible wavelength range was $T_{380-780} = 99.8\%$ for polymer layer thickness of 1 mm.

*Example 5. Synthesis of polyethylene glycol (400) glycerol melamine formaldehyde concentrate PEG-GMFC-3-5 (50%)*

31.53 g (0.25 mol) of melamine, 21.87 g (0.24 mol) of glycerol, 5.00 g (0.05 mol) of PEG-400, 4.86 g of butanol-1, 33.78 g of water and 5.00 g of 2% NaOH solution were placed in a three-neck flask equipped with a stirrer, reflux condenser and thermometer. The contents were heated while mixing to 85-90°C, after that 56.76 g (0.70 mol) of 37% formalin solution preheated to 50°C was added, while ensuring that temperature of the reaction mixture did not fall below 70°C. Melamine dissolved within 1-2 minutes and the reaction mixture became completely transparent. The reaction was conducted for 5 hours at a temperature of 80-85°C. Further, the reaction mixture was quickly cooled (in less than 10 minutes) to room temperature. The obtained 50% solution of melamine copolymer with glycerol and PEG-400 was mixed with concentrated hydrochloric acid in ratio of 5.0 ml of the solution to 0.7-1.3 ml of the acid under ice cooling and vigorous stirring. The obtained transparent solution was placed in an electrochromic cell as electrolyte. It took 5 to 72 hours to form a transparent gel-polymer with proton conductivity.

Conductivity of the obtained gel-polymer electrolyte was in range of $1.64 \cdot 10^{-1}$ to $2.00 \cdot 10^{-1}$ S·cm$^{-1}$, depending on amount of the added acid. Transparency in visible wavelength range was $T_{380-780} = 99.5\%$ for polymer layer thickness of 1 mm.

*Example 6. Synthesis propylene glycol melamine formaldehyde concentrate PG-MFC-3-5 (50%)*

31.53 g (0.25 mol) of melamine, 19.02 g (0.25 mol) of propylene glycol, 4.86 g of butanol-1, 26.94 g of water and 5.00 g of 2% NaOH solution were placed in a three-neck flask equipped with a stirrer, reflux condenser and thermometer. The contents were mixed while heated to 85-90°C, after that 56.76 g (0.70 mol) of 37% formalin solution preheated to 50°C was added, while ensuring that temperature of the reaction mixture did not fall below 70°C. Melamine dissolved within 1-2 minutes and the reaction mixture became completely transparent. The reaction was conducted for 5 hours at a temperature of 80-85°C. Further, the reaction mixture was quickly cooled (in less than 10 minutes) to room temperature. The obtained 50% solution of melamine copolymer with propylene glycol was mixed with concentrated hydrochloric acid at ratio of 5.0 ml of the solution to 0.7-1.4 ml of the acid under ice cooling and vigorous stirring. The obtained transparent solution was placed in an electrochromic cell as electrolyte. It took 12 to 120 hours to form a transparent gel-polymer with proton conductivity.

Conductivity of the obtained gel-polymer electrolyte was in range of $1.2 \cdot 10^{-1}$ to $1.7 \cdot 10^{-1}$ S·cm$^{-1}$, depending on amount of the added acid. Transparency in visible wavelength range was $T_{380-780} = 99.5\%$ for polymer layer thickness of 1 mm.

*Example 7. Synthesis of polyethylene glycol (400) melamine formaldehyde concentrate PEG-MFC-3-7 (70%)*

31.53 g (0.25 mol) of melamine, 100 g (0.25 mol) of PEG-400, 4.86 g of butanol-1, 19.75 g of water and 5.00 g of 2% NaOH solution were placed in a three-neck flask equipped with a stirrer, reflux condenser and thermometer. The contents were mixed while heating up to 85-90°C, after that 56.76 g (0.70 mol) of 37% formalin solution preheated to 50°C was added, while ensuring that temperature of the reaction mixture did not fall below 70°C. Melamine dissolved within 1-2 minutes and the reaction mixture became completely transparent. The reaction was conducted for 7 hours at a temperature of 80-85°C. Further, the reaction mixture was quickly cooled (in less than 10 minutes) to room temperature. The obtained 50% melamine copolymer solution with PEG-400 was mixed under cooling and vigorous stirring with concentrated hydrochloric acid at ratio of 5.0 ml of the solution to 0.8-1.2 ml of the acid. The obtained transparent solution was placed in an electrochromic cell as electrolyte. It took 48 to 120 hours to form a transparent gel-polymer with proton conductivity.

Conductivity of the obtained gel-polymer electrolyte was in range of $1.51 \cdot 10^{-1}$ to $1.62 \cdot 10^{-1}$ S·cm$^{-1}$, depending on amount of the added acid. Transparency in visible wavelength range was $T_{380-780} = 99.3\%$ for polymer layer thickness of 1 mm.

*Example 8. Synthesis of polyethylene glycol (400) polypropylene glycol starch formaldehyde concentrate PEG-PPG-starch-MFC-3-5 (61%)*

32.46 g (0.26 mol) of melamine, 13 g (0.03 mol) of PEG-400, 11.67 g (0.13 mol) of propylene glycol, 1.19 g of cationic starch, 4.86 g of butanol-1 and 0.10 g of NaOH were placed in a three-neck flask equipped with a stirrer, reflux condenser and thermometer. The contents were mixed and heated to 85-90°C, after that 56.76 g (0.70 mol) of 37% formalin solution preheated to 50°C was added, while ensuring that temperature of the reaction mixture did not fall below 70°C. Melamine dissolved within 1-2 minutes and the reaction mixture became transparent with a slight opalescence. The reaction was conducted for 5 hours at a temperature of 80-85°C. Further, the reaction mixture was quickly cooled (in less than 10 minutes) to room temperature. The obtained 61% copolymer solution was mixed with concentrated hydrochloric acid at ratio of 5.0 ml of the solution to 0.5-2.0 ml of the acid under ice cooling and vigorous stirring. The obtained transparent solution was placed in an electrochromic cell as electrolyte. It took 48 to 120 hours to form a transparent gel-polymer with proton conductivity.

Conductivity of the obtained gel-polymer electrolyte was in range of $138 \cdot 10^{-1}$ to $1.80 \cdot 10^{-1}$ S·cm$^{-1}$, depending on amount of the added acid. Transparency in visible wavelength range was $T_{380-780} = 98.5\%$ for polymer layer thickness of 1 mm. The resulting gel had an observable opalescence.

*Example 9. Synthesis of saccharose ethylene glycol melamine formaldehyde concentrate Succharose-EMFC-3-5 (60%)*

31.53 g (0.25 mol) of melamine, 11.15 g (0.2 mol) of ethylene glycol, 17.1 g (0.05 mol) of saccharose, 4.86 g of butanol-1, 9.05 ml of $H_2O$ and 5.00 g of 2% NaOH solution were placed in a three-neck flask equipped with a stirrer, reflux condenser and thermometer. The contents were mixed and heated to 85-90°C, after that 56.76 g (0.70 mol) of 37% formalin solution preheated to 50°C was added, while ensuring that temperature of the reaction mixture did not fall below 70°C. Melamine dissolved within 1-2 minutes and the reaction mixture became transparent. The reaction was conducted for 5 hours at a temperature of 80-85°C. Further, the reaction mixture was quickly cooled (in less than 10 minutes) to room temperature. The obtained 60% polymer solution was mixed under ice cooling and vigorous stirring with concentrated hydrochloric acid at ratio of 5.0 ml of the solution to 0.7-1.5 ml of the acid. The obtained transparent solution was placed in an electrochromic cell as electrolyte. It took 12 to 48 hours to form a gel-polymer with proton conductivity.

Conductivity of the obtained gel-polymer electrolyte was in range of $1.55 \cdot 10^{-1}$ to $1.80 \cdot 10^{-1}$ S·cm$^{-1}$, depending on amount of the added acid. Transparency in visible wavelength range was $T_{380-780} = 99.0\%$ for polymer layer thickness of 1 mm.

*Example 10. Synthesis of carboxymethyl cellulose ethylene glycol melamine formaldehyde concentrate CMC-EMFC-3-3 (18%)*

31.53 g (0.25 mol) of melamine, 11.17 g (0.18 mol) of ethylene glycol, 16.81 g (0.07 mol) of sodium carboxymethyl cellulose (CMC), 4.86 g of butanol-1 and 453.90 ml of $H_2O$ were placed in a three-neck flask equipped with a stirrer, reflux condenser and thermometer. The contents were mixed and heated to 85-90°C, after that 56.76 g (0.70 mol) of 37% formalin solution preheated to 50°C was added, while ensuring that temperature of the reaction mixture did not fall below 70°C. Melamine dissolved within 1-2 minutes and the reaction mixture became transparent. The reaction was conducted for 3 hours at a temperature of 80-85°C. Further, the reaction mixture was quickly cooled (in less than 10 minutes) to room temperature. The obtained 18% polymer solution was mixed under cooling and vigorous stirring with concentrated hydrochloric acid at ratio of 5.0 ml of the solution to 0.7-3.5 ml of the acid. The obtained transparent solution was placed in an electrochromic cell as electrolyte. It took 12 to 160 h to form a gel-polymer with proton conductivity.

Conductivity of the obtained gel-polymer electrolyte was in range of $1.60 \cdot 10^{-1}$ to $2.40 \cdot 10^{-1}$ S·cm$^{-1}$, depending on amount of the added acid. Transparency in visible wavelength range was $T_{380-780} = 99.3\%$ for polymer layer thickness of 1 mm.

*Example 11. Synthesis of saccharose hydroxyethyl cellulose ethylene glycol melamine formaldehyde concentrate Saccharose-HEC-EMFC-3-3 (25%)*

31.53 g (0.25 mol) of melamine, 9.31 g (0.15 mol) of ethylene glycol, 23.94 g (0.07 mol) of saccharose, 2.00 g of hydroxyethyl cellulose (HEC), 4.86 g of butanol-1, 217.69 ml of $H_2O$ and 5.00 g of 2% NaOH solution were placed in a three-neck flask equipped with a stirrer, reflux condenser and thermometer. The contents were mixed and heated to 85-90°C, after that 56.76 g (0.70 mol) of 37% formalin solution preheated to 50°C was added, while ensuring that temperature of the reaction mixture did not fall below 70°C. Melamine dissolved within 1-2 minutes and the reaction mixture became transparent. The reaction was conducted for 3 hours at a temperature of 80-85°C. Further, the reaction mixture was quickly cooled (in less than 10 minutes) to room temperature. The obtained 25% polymer solution was mixed under ice cooling and vigorous stirring with concentrated hydrochloric acid at ratio of 5.0 ml of the solution to 0.5-3.5 ml of the acid. The obtained transparent solution was placed in an electrochromic cell as electrolyte. It took 12 to 160 h to form a transparent gel-polymer with proton conductivity.

Conductivity of the obtained gel-polymer electrolyte was in range of $1.35 \cdot 10^{-1}$ to $2.50 \cdot 10^{-1}$ S·cm$^{-1}$, depending on amount of the added acid. Transparency in visible wavelength range was $T_{380-780} = 99.6\%$ for polymer layer thickness of 1 mm.

*Example 12. Synthesis of saccharose polyvinyl alcohol ethylene glycol melamine formaldehyde concentrate Saccharose-PVA-EMFC-3-5 (60%)*

31.53 g (0.25 mol) of melamine, 9.31 g (0.15 mol) of ethylene glycol, 23.94 g (0.07 mol) of saccharose, 4.86 g of butanol-1, 3.50 g of polyvinyl alcohol (PVA), 217.69 ml of $H_2O$ and 5.00 g of 2% NaOH solution were placed in a three-neck flask equipped with a stirrer, reflux condenser and thermometer. The contents were mixed and heated to 85-90°C, after that 56.76 g (0.70 mol) of 37% formalin solution preheated to 50°C was added, while ensuring that temperature of the reaction mixture did not fall below 70°C. Melamine dissolved within 1-2 minutes and the reaction mixture became transparent. The reaction was conducted for 5 hours at a temperature of 80-85°C. Further, the reaction mixture was quickly cooled (in less than 10 minutes) to room temperature. The obtained 60% polymer solution was mixed under ice cooling and vigorous stirring with concentrated hydrochloric acid at ratio of 5.0 ml of the solution to 0.5-2.0 ml of the acid. The obtained transparent solution was placed in an electrochromic cell as electrolyte. It took 12 to 78 hours to form a gel-polymer with proton conductivity.

Conductivity of the obtained gel-polymer electrolyte was in range of $1.44 \cdot 10^{-1}$ to $1.60 \cdot 10^{-1}$ S·cm$^{-1}$, depending on amount of the added acid. Transparency in visible wavelength range was $T_{380-780} = 99.8\%$ for polymer layer thickness of 1 mm.

*Example 13. Synthesis of glyoxal ethylene glycol melamine formaldehyde concentrate Glyoxal-EMFC-3-5 (50%)*

31.53 g (0.25 mol) of melamine, 15.52 g (0.25 mol) of ethylene glycol, 36.28 g (0.25 mol) of glyoxal, 4.86 g of butanol-1, 10.17 g of water and 10.00 g of 2% NaOH solution were placed in a three-neck flask equipped with a stirrer, reflux condenser and thermometer. The contents were mixed and heated to 85-90°C, after that 56.76 g (0.70 mol) of 37% formalin solution preheated to 50°C was added, while ensuring that temperature of the reaction mixture did not fall below 70°C. Melamine dissolved within 1-2 minutes and the reaction mixture became completely transparent. The reaction was conducted for 5 hours at a temperature of 80-85°C. Further, the reaction mixture was quickly cooled (in less than 10 minutes) to room temperature. The obtained 50% copolymer solution was mixed with concentrated hydrochloric acid at ratio of 5.0 ml of the solution to 0.7-1.5 ml of the acid under ice cooling and vigorous stirring. The obtained transparent solution was placed in an electrochromic cell as electrolyte. It took 7 to 48 hours to form a proton-conducting gel-polymer.

Conductivity of the obtained gel-polymer electrolyte was in range of $1.53 \cdot 10^{-1}$ to $1.55 \cdot 10^{-1}$ S·cm$^{-1}$, depending on amount of the added acid. Transparency in the visible wavelength range was $T_{380-780}$ = 99.5% for polymer layer thickness of 1 mm.

The theoretical analysis and experiments carried out by the inventor have shown that it is possible to use other strong proton acids, for instance, such inorganic acids as $H_2SO_4$, $H_3PO_4$, HBr, HF, $HBF_4$, $CF_3SO_3H$, or such organic acids as $CH_2ClCOOH$, $CCl_3COOH$, $CF_3COOH$, for obtaining transparent proton-conducting polymer electrolytes.

The first stage of the reaction results in formation of trimethylol (A) (Fig. 1) that is a product of interaction of melamine with three moles of formalin. Trimethylol is highly reactive and therefore it easily reacts with almost any compounds containing hydroxyl and amino groups (organic amines, alcohols, polyols, monosaccharides, oligosaccharides and polysaccharides, as well as with any multi-base organic acids or their anhydrides), forming the corresponding copolymers, graft polymers and their blends, which, upon interaction with acids, turn into gel-polymer electrolytes (B) (Fig. 2).

In the examples above, polyols are represented by glycerin, ethylene glycol, polyethylene glycol and polyvinyl alcohol. At the same time, it is possible to use other polyatomic alcohols, for example, propylene glycol, polypropylene glycol, polyethylene oxide, etc. The inventor is not physically able to conduct experiments with all polyols existing in nature. However, it should be apparent to those skilled in the art that possibility of their use in this invention follows from the common chemical properties of polyols.

In the examples above, monosaccharides and oligosaccharides are generally represented by sucrose. In this case, it is also possible to use other short saccharides - monosaccharides (for example, glucose, fructose), disaccharides (for example, lactose, maltose, isomaltose), trisaccharides (for example, glyceraldehyde, maltotriose, raffinose), tetrasaccharides (for example, stachyose, lichyose, maltotetraose), etc. As noted above with respect to polyols, the inventor is not physically able to conduct experiments with all monosaccharides and oligosaccharides existing in nature, however, possibility of their use in this invention follows from the common chemical properties of monosaccharides and oligosaccharides, which should be apparent to those skilled in the art.

In the examples above, polysaccharides and their derivatives are represented by sodium carboxymethyl cellulose (a representative of carboxylate compounds) and hydroxyethyl cellulose. In this case, it is possible to use other derivatives of polysaccharides, for example, hydroxypropyl, hydroxymethyl and methyl cellulose. As noted above with respect to polyols and saccharides, the inventor is not physically able to conduct experiments with all naturally occurring polysaccharides and their derivatives, in particular, those derived from cellulose, starch or chitin, however, possibility of their use in this invention follows from the common chemical properties of polysaccharides and their derivatives, which should be apparent to those skilled in the art.

*Example 14. Electrochromic device with $WO_{2.9}$:Al:C:N and $CeO_2$:Zr-based electrodes*

$WO_{2.9}$:Al:C:N -based electrochromic electrode material, 500 nm thick layer and $CeO_2$:Zr-based counter electrode material, 300 nm thick layer were deposited on FTO-glass substrates by magnetron sputtering.

A freshly prepared melamine copolymer solution of Example 12 was blended with concentrated sulfuric acid and placed between the electrodes. The appeared reaction of further polymerization of the melamine copolymer resulted in formation of an elastic transparent gel-polymer electrolyte. The electrochromic cell developed in this way was operable at potential of ±1.0 V. When a negative potential was applied to the electrochromic electrode, it became colored and when the polarity is reversed, it became bleached. Maximum transmission capacity in visible wavelength range for the colored and discolored states was $\Delta T_{380-780}$ = 40%.

*Example 15. Lead-acid battery with gel-polymer electrolyte*

A freshly prepared melamine copolymer solution of Example 9 was blended with concentrated sulfuric acid and placed into a conventional lead-acid battery with rated voltage of 12 V without electrolyte. The $H_2SO_4$ concentration was at least 37%. The reaction resulted in a deeper polymerization of the original copolymer that happened immediately in the battery, and elastic transparent gel-polymer between two electrodes made of lead and lead oxide ($PbO_2$) was obtained. The process of transition to the state of a conductive gel took 10 to 12 hours. The lead-acid battery was operable under normal conditions with cell voltage in range from 1.80 V in the discharged state to 2.25 V in the fully charged state (immediately after charging). Capacity of the battery corresponded to its nominal capacity specified in its technical certificate with the usual electrolyte containing 37-40% of sulfuric acid, which originally was intended for it.

*Example 16. Symmetrical supercapacitor with proton gel-polymer electrolyte*

A freshly prepared melamine copolymer solution of Example 9 was blended with concentrated sulfuric acid and placed between two sheets of special carbon paper having highly porous surface of activated carbon. Concentration of $H_2SO_4$ was 0.5-2.0 M. The deeper polymerization reaction launched in this way produced an elastic transparent gel-polymer electrolyte that was located between the carbon electrodes. The developed symmetrical supercapacitor demonstrated operability in range of 0-1.2 V and had capacitance values usual for this type of double electric layer capacitors.

**Non-Patent References**

[1] Ayushi Choudhary , Eswara Prasad. Electrochromic glass market by application (windows, mirror, and display) and end-user industry (construction, automotive, aerospace, and others): Global Opportunity Analysis and Industry Forecast, 2020-2027, Allied Market Research, June 2020.

[2] Smart glass and smart window market report 2019-2029, Visiongain, July 2019.

[3] H. Iwahara. Oxide-ionic and protonic conductors based on perovskite-type oxides and their possible applications. Solid State Ionics, vol. 52, no. 1-3, pp. 99-104, May 1992.

[4] S. Oukassi, C. Giroud-Garampon, C. Dubarry, C. Ducros, R. Salot. All inorganic thin film electrochromic device using LiPON as the ion conductor. Solar Energy Materials and Solar Cells, vol. 145, pp. 2-7, July 2015.

[5] Y. Wang et al. Design principles for solid-state lithium superionic conductors. Nature Materials, vol. 14, no. 10, pp. 1026-1031, August 2015.

[6] F. Alloina, C. Iojoiu. Composite polymer electrolytes for electrochemical devices. Polymer Electrolytes. Fundamentals and Applications, 2010, pp. 129-175.

[7] N.A. Choudhury, A.K. Shukla, S. Sampath, S. Pitchumani. Cross-linked polymer hydrogel electrolytes for electrochemical capacitors. Journal of Electrochemical Society, vol. 153, no. 3, 2006.

[8] J.B. Kerr. Polymeric electrolytes: an overview. Lithium Batteries: Science and Technology, G.-A. Nazri, G. Pistoia, Eds. Boston, MA: Springer US, 2003, pp. 575-622.

[9] K.S. Ngai, S. Ramesh, K. Ramesh, J.C. Juan. A review of polymer electrolytes: fundamental, approaches and applications. Ionics, vol. 22, pp. 1259-1279, 2016.

[10] W. Wang, P. Alexandridis. Composite polymer electrolytes: nanoparticles affect structure and properties. Polymers, vol. 8, no. 11, 2016.

[11] P. Ghosh, C.K. Dhole, S. Ganguly, D. Banerjee, K. Kargupta. Portable smart highly proton conductive all inorganic gel paste electrolyte with optimum phosphorous to silicon ratio for enhanced durable operation of a fuel cell. Sustainable Energy & Fuels, 2018, no. 2, pp. 1737-1748.

[12] V.K. Thakur, G. Ding, J. Ma, P.S. Lee, X. Lu. Hybrid materials and polymer electrolytes for electrochromic device applications. Advanced Materials., vol. 24, no. 30, pp. 4071-4096, 2012.

[13] W. Ma et al. Cross-linked aromatic cationic polymer electrolytes with enhanced stability for high temperature fuel cell applications. Energy & Environmental Science, vol. 5, no. 6, pp. 7617-7625, 2012.

[14] G. Wang et al. Gel polymer electrolytes based on polyacrylonitrile and a novel quaternary ammonium salt for dye-sensitized solar cells. Materials Research Bulletin, vol. 39, no. 13, pp. 2113-2118, 2004.

[15] US2345543A Cationic melamine-formaldehyde resin solution, 1942.

[16] B. Bann, S.A. Miller. Melamine and Derivatives of Melamine. Chemical Reviews, vol. 58, no. 1, pp. 131-172, 1958.

[17] D.J. Merline, S. Vukusic, A.A. Abdala. Melamine formaldehyde: curing studies and reaction mechanism. Polymer Journal, vol. 45, no. 4, pp. 413-419, 2013.

[18] J. K. Fink. Melamine Resins. In: Reactive Polymers: Fundamentals and Applications. A Concise Guide to Industrial Polymers. Second edition, pp. 193-201, 2013.

[19] K. Bretterbauer, C. Schwarzinger. Melamine derivatives - a review on synthesis and application. Current Organic Synthesis, 9(3):342, pp. 342-356, 2012.

[20] C. Du Fresne Von Hohenesche, D.F. Schmidt, V. Schädler. Nanoporous melamine-formaldehyde gels by microemulsion templating. Chemical Materials, vol. 20, no. 19, pp. 6124-6129, 2008.

[21] K. Shijina et al. Melamine formaldehyde-metal organic gel interpenetrating polymer network derived intrinsic Fe-N-doped porous graphitic carbon electrocatalysts for oxygen reduction reaction. New Journal of Chemistry, vol. 42, no. 23, pp. 18690-18701, 2018.

[22] K. Mishra, S. A. Hashmi, D. K. Rai. Studies on a proton battery using gel polymer electrolyte. High Performance Polymers, vol. 26, no. 6, pp. 672-676, 2014.

[23] C. Zhong, Y. Deng, W. Hu, J. Qiao, L. Zhang, J. Zhang. A review of electrolyte materials and compositions for electrochemical supercapacitors. Chemical Society Reviews, vol. 44, no. 21, pp. 7484-7539, 2015.

[24] Abraham J. Domb, Joseph Kost, David M. Wiseman. Handbook of Biodegradable Polymers. First Edition. CRC Press, 2019.

[25] W. Chen et al. A novel ionically crosslinked gel polymer electrolyte as an ion transport layer for high-performance electrochromic devices. Journal of Materials Chemistry C, vol. 7, no. 13, pp. 3744-3750, 2019.

[26] L.N. Han, X. Wei, Q. C. Zhu, S. M. Xu, K. X. Wang, J. S. Chen. Nitrogen-doped carbon nets with micro/mesoporous structures as electrodes for high-performance supercapacitors. Journal of Materials Chemistry A, vol. 4, no. 42, pp. 16698-16705, 2016.

[27] J.A. Fernandez, T. Morishita, M. Toyoda, M. Inagaki, F. Stoeckli, T.A. Centeno. Performance of mesoporous carbons derived from poly(vinyl alcohol) in electrochemical capacitors. Journal of Power Sources, vol. 175, no. 1-3, pp. 675-679, 2008.

## Claims

1.  A method of manufacturing proton-conducting gel-polymer electrolytes, the method including:

    - providing copolymerization reaction of melamine and formaldehyde or melamine and glyoxal with one or more polyols;
    - adding a concentrated acid to form an optically transparent gel-polymer.

2.  The method of claim 1, wherein polyol is one or more substances from the following group: glycerol, ethylene glycol, propylene glycol, polyethylene glycol, polypropylene glycol, polyethylene oxide, polyvinyl alcohol.

3.  The method of claim 1, wherein the acid is an organic acid.

4.  The method of claim 1, wherein the acid is an inorganic acid.

5.  A method of manufacturing proton-conducting gel-polymer electrolytes, the method including:

    - providing copolymerization reaction of melamine and formaldehyde with one or several monosaccharides, oligosaccharides or polysaccharides and/or their derivatives;
    - adding a concentrated acid to form an optically transparent gel-polymer.

6.  The method of claim 5, wherein the polysaccharide is one or several substances from the following group: starch, cellulose, chitin.

7.  The method of claim 6, wherein the polysaccharide derivatives are carboxylate compounds.

8.  The method of claim 6, wherein the polysaccharide derivatives are esters.

9.  The method of claim 5, wherein the acid is an organic acid.

10. The method of claim 5, wherein the acid is an inorganic acid.

11. A method of manufacturing proton-conducting gel-polymer electrolytes, the method including:

    - providing copolymerization reaction of melamine and formaldehyde or melamine and glyoxal with one or several polyols and with one or several monosaccharides, oligosaccharides or polysaccharides and/or their derivatives;
    - adding a concentrated acid to form an optically transparent gel-polymer.

12. The method of claim 11, wherein the polyol is one or several substances from the following group: glycerol, ethylene glycol, propylene glycol, polyethylene glycol, polypropylene glycol, polyethylene oxide, polyvinyl alcohol.

13. The method of claim 11, wherein the polysaccharide is one or several substances from the following group: starch, cellulose, chitin.

14. The method of claim 13, wherein the polysaccharide derivatives are carboxylate compounds.

15. The method of claim 13, wherein the polysaccharide derivatives are esters.

16. The method of claim 11, wherein the acid is an organic acid.

17. The method of claim 11, wherein the acid is an inorganic acid.

Stage 1. Trimethylol formation

Fig. 1

Stage 2. Melamine-formaldehyde gel-polymer electrolyte synthesis

= polyols, monosaccharides, disaccharides or any polysaccharides or their product with free -OH groups where x = 0, 1, 2, ...

$H_nX^{n-}$ = acids: HCl, HBr, $H_2SO_4$, $H_3PO_4$, etc.

$(H_3O^+)$ = aqueous cation

$(X^{n-})$ = acid anion

Fig. 2

Fig. 3

Fig. 4

Fig.5

Charged state
No load

Electrodes

**(a)**

+    —

Gel-polymer
electrolyte

**(b)**

Load    ē flow

**(c)**

No load
No charge

Proton-anion pairs

Fig. 6

**INTERNATIONAL SEARCH REPORT**

| International application No. |
|---|
| PCT/RU 2020/050293 |

| A. | CLASSIFICATION OF SUBJECT MATTER |
|---|---|

See supplemental sheet

According to International Patent Classification (IPC) or to both national classification and IPC

| B. | FIELDS SEARCHED |
|---|---|

Minimum documentation searched (classification system followed by classification symbols)

C08J, C08G, C08F, H01M

Documentation searched other than minimum documentation to the extent that such documents are included in the fields searched

Electronic data base consulted during the international search (name of data base and, where practicable, search terms used)

Espacenet, Google, Patentscope, Patsearch, RUPTO, USPTO

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 20120049748 A (KONKUK UNIVERSITY INDUSTRIAL COOPERATION CORP.), 17.05.2012, the abstract, [0015]-[0029], points 1-5 of the claims | 1-17 |
| A | US 5081163 A1 (THE UNITED STATES OF AMERICA AS REPRESENTED BY THE DEPARTMENT OF ENERGY), 14.01.1992 | 1-17 |
| A | FI 802061 A (DU PONT), 28.12.1980, the abstract | 1-17 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 January 2021 (29.01.2021) | 04 February 2021 (04.02.2021) |

| Name and mailing address of the ISA/ RU | Authorized officer |
|---|---|
| Facsimile No. | Telephone No. |

Form PCT/ISA/210 (second sheet) (April 2005)

INTERNATIONAL SEARCH REPORT

International application No.

PCT/RU 2020/050293

*C08J 3/075*  (2006.01)
*C08G 14/10*  (2006.01)
*C08G 14/12*  (2006.01)
*C08F 251/00*  (2006.01)
*C08F 16/02*  (2006.01)
*H01M 10/0561* (2010.01)

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7931964 B2
- EP 2983186 A1
- US 7842637 B2
- US 6280881 B1
- US 8642895 B2
- US 8968928 B2
- US 7238451 B2
- US 2345543 A

### Non-patent literature cited in the description

- **AYUSHI CHOUDHARY ; ESWARA PRASAD.** Electrochromic glass market by application (windows, mirror, and display) and end-user industry (construction, automotive, aerospace, and others): Global Opportunity Analysis and Industry Forecast, 2020-2027. *Allied Market Research,* June 2020
- Smart glass and smart window market report 2019-2029. *Visiongain,* July 2019
- **H. IWAHARA.** Oxide-ionic and protonic conductors based on perovskite-type oxides and their possible applications. *Solid State Ionics,* May 1992, vol. 52 (1-3), 99-104
- **S. OUKASSI ; C. GIROUD-GARAMPON ; C. DUBARRY ; C. DUCROS ; R. SALOT.** All inorganic thin film electrochromic device using LiPON as the ion conductor. *Solar Energy Materials and Solar Cells,* July 2015, vol. 145, 2-7
- **Y. WANG et al.** Design principles for solid-state lithium superionic conductors. *Nature Materials,* August 2015, vol. 14 (10), 1026-1031
- **F. ALLOINA ; C. IOJOIU.** Composite polymer electrolytes for electrochemical devices. Polymer Electrolytes. *Fundamentals and Applications,* 2010, 129-175
- **N.A. CHOUDHURY ; A.K. SHUKLA ; S. SAMPATH ; S. PITCHUMANI.** Cross-linked polymer hydrogel electrolytes for electrochemical capacitors. *Journal of Electrochemical Society,* 2006, vol. 153 (3
- Polymeric electrolytes: an overview. **J.B. KERR.** Lithium Batteries: Science and Technology. Springer, 2003, 575-622
- **K.S. NGAI ; S. RAMESH ; K. RAMESH ; J.C. JUAN.** A review of polymer electrolytes: fundamental, approaches and applications. *Ionics,* 2016, vol. 22, 1259-1279
- **W. WANG ; P. ALEXANDRIDIS.** Composite polymer electrolytes: nanoparticles affect structure and properties. *Polymers,* 2016, vol. 8 (11
- **P. GHOSH ; C.K. DHOLE ; S. GANGULY ; D. BANERJEE ; K. KARGUPTA.** Portable smart highly proton conductive all inorganic gel paste electrolyte with optimum phosphorous to silicon ratio for enhanced durable operation of a fuel cell. *Sustainable Energy & Fuels,* 2018, vol. 2, 1737-1748
- **V.K. THAKUR ; G. DING ; J. MA ; P.S. LEE ; X. LU.** Hybrid materials and polymer electrolytes for electrochromic device applications. *Advanced Materials.,* 2012, vol. 24 (30), 4071-4096
- **W. MA et al.** Cross-linked aromatic cationic polymer electrolytes with enhanced stability for high temperature fuel cell applications. *Energy & Environmental Science,* 2012, vol. 5 (6), 7617-7625
- **G. WANG et al.** Gel polymer electrolytes based on polyacrylonitrile and a novel quaternary ammonium salt for dye-sensitized solar cells. *Materials Research Bulletin,* 2004, vol. 39 (13), 2113-2118
- **B. BANN ; S.A. MILLER.** Melamine and Derivatives of Melamine. *Chemical Reviews,* 1958, vol. 58 (1), 131-172
- **D.J. MERLINE ; S. VUKUSIC ; A.A. ABDALA.** Melamine formaldehyde: curing studies and reaction mechanism. *Polymer Journal,* 2013, vol. 45 (4), 413-419
- **J. K. FINK.** Melamine Resins. *Reactive Polymers: Fundamentals and Applications. A Concise Guide to Industrial Polymers. Second edition,* 2013, 193-201
- **K. BRETTERBAUER ; C. SCHWARZINGER.** Melamine derivatives - a review on synthesis and application. *Current Organic Synthesis,* 2012, vol. 9 (3), 342-356
- **C. DU FRESNE VON HOHENESCHE ; D.F. SCHMIDT ; V. SCHÄDLER.** Nanoporous melamine-formaldehyde gels by microemulsion templating. *Chemical Materials,* 2008, vol. 20 (19), 6124-6129

- **K. SHIJINA et al.** Melamine formaldehyde-metal organic gel interpenetrating polymer network derived intrinsic Fe-N-doped porous graphitic carbon electrocatalysts for oxygen reduction reaction. *New Journal of Chemistry,* 2018, vol. 42 (23), 18690-18701
- **K. MISHRA ; S. A. HASHMI ; D. K. RAI.** Studies on a proton battery using gel polymer electrolyte. *High Performance Polymers,* 2014, vol. 26 (6), 672-676
- **C. ZHONG ; Y. DENG ; W. HU ; J. QIAO ; L. ZHANG ; J. ZHANG.** A review of electrolyte materials and compositions for electrochemical supercapacitors. *Chemical Society Reviews,* 2015, vol. 44 (21), 7484-7539
- **ABRAHAM J. DOMB ; JOSEPH KOST ; DAVID M. WISEMAN.** Handbook of Biodegradable Polymers. CRC Press, 2019
- **W. CHEN et al.** A novel ionically crosslinked gel polymer electrolyte as an ion transport layer for high-performance electrochromic devices. *Journal of Materials Chemistry C,* 2019, vol. 7 (13), 3744-3750
- **L.N. HAN ; X. WEI ; Q. C. ZHU ; S. M. XU ; K. X. WANG ; J. S. CHEN.** Nitrogen-doped carbon nets with micro/mesoporous structures as electrodes for high-performance supercapacitors. *Journal of Materials Chemistry A,* 2016, vol. 4 (42), 16698-16705
- **J.A. FERNÁNDEZ ; T. MORISHITA ; M. TOYODA ; M. INAGAKI ; F. STOECKLI ; T.A. CENTENO.** Performance of mesoporous carbons derived from poly(vinyl alcohol) in electrochemical capacitors. *Journal of Power Sources,* 2008, vol. 175 (1-3), 675-679